# EUROPEAN PATENT SPECIFICATION

(11) **EP 0 666 560 B1**
(45) Date of publication and mention of the grant of the patent: **09.01.2002**
(21) Application number: 95300723.4
(22) Date of filing: 06.02.1995
(51) Int. Cl.: G11B 5/11, G11B 5/105

(54) **Magnetic head having improved shielding member**
Magnetkopf mit verbessertem Abschirmglied
Tête magnétique à organe de blindage amélioré

(30) Priority: 07.02.1994 JP 1372794; 25.08.1994 US 295921
(43) Date of publication of application: 09.08.1995
(73) Proprietor: Mitsumi Electric Company Ltd., Chofu-shi Tokyo (JP)
(72) Inventor: Ohsaka, Tomohiko, c/o Yamagata Mitsumi Co., Ltd., Yamagata-shi, Yamagata-ken (JP)
(74) Representative: Luckhurst, Anthony Henry William

(56) References cited:
- DE-A- 1 800 384
- JP-A- 63 069 010
- US-A- 4 071 868
- US-A- 4 636 902
- PATENT ABSTRACTS OF JAPAN vol. 9 no. 253 (P-395) ,11 October 1985 & JP-A-60 103507 (SANKIYOU SEIKI SEISAKUSHO K. K.) 7 June 1985,
- IBM TECHNICAL DISCLOSURE BULLETIN, vol. 12, no. 4, September 1969 ARMONK, N.Y., US, pages 564-565, G. W. BROCK ET AL. 'Laminated Structures'
- PATENT ABSTRACTS OF JAPAN vol. 12 no. 16 (P-656) ,19 January 1988 & JP-A-62 172509 (ALPS ELECTRIC CO LTD) 29 July 1987,

## Description

The present invention relates to a magnetic head, particularly to a magnetic head having an improved shielding member.

A magnetic head, in particular a magnetic head for floppy discs has a structure, generally speaking, in which a core and coil wound on the core are mounted on a gimbal plate so that they project from the gimbal plate, as is well-known. Therefore, the core and coil are likely to be adversely affected by an external magnetic field. It is thus preferable that a shielding ring or the like be provided in the magnetic head to shield the core and coil from such an external magnetic field.

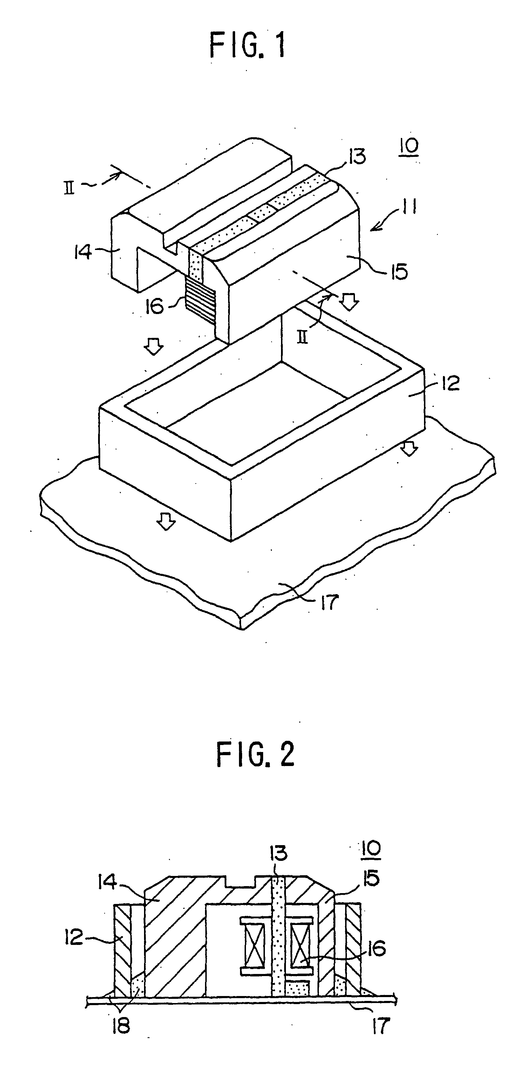

With regard to FIGS.1 and 2, a magnetic head 10 for floppy discs in the related art will now be described. The magnetic head 10 has a core-slider assembly 11 and a shielding ring 12 therein. The core-slider assembly 11 includes a core 13, a coil 16 wound on a middle portion of the core 13 and two sliders 14 and 15. The sliders 14 and 15 are fixed on a top portion of the core 13 and positioned on opposite sides of the coil 16. In other words, the coil 16 are inserted in a space formed between the sliders 14 and 15. The core-slider assembly is fixed on a gimbal plate 17 using adhesive 18.

The shielding ring 12 is made of sintered ferrite obtained as a result of sintering ferrite acting as a magnetic substance and has a rectangle-frame shape, with a rectangular-parallelepiped configuration, so as to surround the above-described core-slider assembly 11. The shielding ring is also fixed on the gimbal plate 17 using the adhesive 18. To shield the core 13 and coil 16 from an external magnetic field is a function of the shielding ring 12.

However, since sintered ferrite is a relatively expensive material, in general, the shielding ring 12 made of the sintered ferrite is relatively expensive. Further, since sintered ferrite is likely to crack, in general, a yield rate of products made of the sintered ferrite, and thus a yield rate of production of the shielding rings 12, is relatively low. Such a low yield rate also causes the cost of the shielding rings 12 to rise and thus the magnetic head 10 is expensive.

Japanese Patent Application No. 60-103507 describes a magnetic head in which shield means are provided. The shield means comprise three ring plates which are laminated together, wherein the middle plate is made of aluminum and the two external plates are made of Permalloy.

The above prior art is reflected by the preamble of claim 8.

An object of the present invention is to provide a magnetic head, in particular a magnetic head for floppy discs having an improved, economical shielding member therein.

According to a first aspect of the present invention, there is provided a magnetic head as set out in accompanying claims 1 and 8.

In order to achieve the above object of the present invention, a magnetic head according to the first aspect of the present invention uses a shielding member having structure consisting of a plurality of magnetic layers in a stacked arrangement and surrounding a core and coil of the magnetic head. Such a shielding member such as that having the above-mentioned structure enables the shielding member to be less expensive than the shielding ring 12 of the related art made of sintered ferrite while maintaining a necessary shielding capability of the shielding member. Further, an insulator layer is inserted between the magnetic layers of each pair of adjacent magnetic layers of the plurality of magnetic layers so that the magnetic layers are electrically insulated from one another. Using a shielding member having such a structure suppresses flowing of stray currents in the plurality of magnetic layers and thus enables the shielding capability of the shielding member to be improved.

In particular, using sheets of magnetic metal such as permalloy as the material for the plurality of magnetic layers of the shielding member enables the cost of the material of the shielding member to be reduced and makes it possible to easily produce the shielding members while maintaining the necessary shielding capability of the shielding member. This is because such magnetic layers made of sheets of magnetic metal are relatively inexpensive and can be easily handled, easily processed and have superior mechanical strength in comparison to sintered products such as sintered-ferrite products. Thus, as a result of using sheets of magnetic metal as the shielding member, production costs of the shielding members and thus the production costs of the magnetic heads using the shielding members can be reduced.

According to a second aspect of the invention, there is provided a magnetic head as set out in accompanying claim 8.

Other objects and further features of the present invention will become more apparent from the following detailed description when read in conjunction with the accompanying drawings.
FIG.1 shows an exploded perspective view of a magnetic head for floppy discs in the related art;
FIG.2 shows a side elevational sectional view of the magnetic head shown in FIG.1 taken along a line II-II;
FIG.3 shows an exploded perspective view of a magnetic head for floppy discs as background to the present invention;
FIG.4 shows a side elevational sectional view of the magnetic head shown in FIG.3 taken along a line IV-IV;
FIG.5 shows an exploded perspective view of a magnetic head for floppy discs in a first embodiment of the present invention;
FIG.6 shows a side elevational sectional view of the magnetic head shown in FIG.5 taken along a line VI-VI;
FIG.7 shows an exploded perspective view of a magnetic head for floppy discs as background to the second and third embodiments of the present invention;
FIG.8 shows a side elevational sectional view of the magnetic head shown in FIG.7 taken along a line VIII-VIII;
FIG.9 shows an exploded perspective view of a magnetic head for floppy discs in a second embodiment of the present invention;
FIG.10 shows a side elevational sectional view of the magnetic head shown in FIG.9 taken along a line X-X;
FIG.11 shows an exploded perspective view of a magnetic head for floppy discs in a third embodiment of the present invention; and
FIG.12 shows a side elevational sectional view of the magnetic head shown in FIG.11 taken along a line XII-XII.

Each of magnetic heads 30, 40, 50, 70 and 90 in first, second, third, fourth and fifth embodiments according to the present invention, which will be described below, is incorporated into a magnetic-disc device for floppy discs. As well-known, such a magnetic disc device writes data on a floppy disc serving as a magnetic recording medium through such a magnetic head and similarly reads data previously written on a floppy disc. In such operations, the disc device normally uses two similar magnetic heads having a floppy disc inserted therebetween. Each of the magnetic heads is fixed on a flexible gimbal plate so that the magnetic head can move on a rotating floppy disc having surfaces which are inevitably slightly bent. Each gimbal plate having the magnetic head fixed thereon is mounted on a carriage installed in the magnetic disc device so that the magnetic heads can sandwich a floppy disc inserted therebetween.

Writing data on a floppy disc and erasing data previously written on the floppy disc is performed as follows: A predetermined electric current is made to flow in a coil of each magnetic head so that a core having the coil wounded thereon generates a corresponding magnetic flux. The core, using the magnetic flux, writes corresponding data on the floppy disc, or erases data previously written on the floppy disc, the core being in contact with the disc. Reading data previously magnetically written on a floppy disc is performed as follows: Magnetic flux flows in the core, which is in contact with the floppy disc, the magnetic flux corresponding to the data previously written on the floppy disc. An electric current, corresponding to the magnetic flux, thus flows in the coil wound on the core, the data being thus read using the electric current.

A shielding ring acting as a shielding member has the following functions: The shielding ring shields the coil and core of the magnetic head from a magnetic field generated by electric circuits present in the magnetic disc device. Thus, the electric current flowing in the coil and the magnetic flux flowing in the core are protected from being adversely affected by the magnetic field, that is, protected from being contaminated by noise during the writing of data onto the floppy disc and reading of data from the floppy disc.

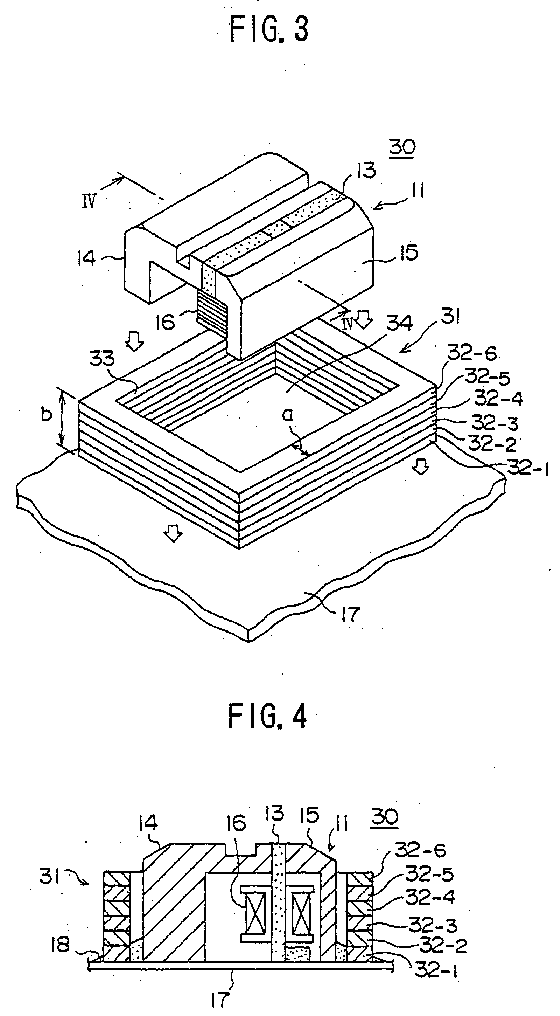

With reference to FIGS.3 and 4, the magnetic head 30 for floppy discs as background to the present invention will be described. Elements in FIGS.3 and 4 having structures identical to those of corresponding elements in FIGS.1 and 2 are given reference numerals the same as those given to such corresponding elements, description of the elements therefore being omitted. A shielding ring 31 having an opening 34 therein is formed as follows: 6 rectangle-frame-shaped sheet pieces 32₋₁ through 32₋₆, each made of permalloy and having an opening 33, are formed through a press-using process. The 6 sheet pieces are stacked on one another and fastened to one another by deforming edges of the sheet pieces together so that the 6 sheet pieces are integrated. The openings 33 of the 6 sheet pieces form the opening 34 of the shielding ring 31 as a result of the openings 33 being aligned with one another. As shown in FIG.3, the shielding ring 31 has a thickness of 'a' and a height of 'b' and is similar to the shape of the shielding ring 12 shown in FIG.1, thus having a volume V₁ equivalent to a volume of the shielding ring 12.

The shielding ring 31 is fixed on the gimbal plate 17 using the adhesive 18 and surrounds the core-slider assembly 11, also fixed on the gimbal plate 17 using the adhesive 18, so as to shield the coil 16 in particular from an external magnetic field. Since the shielding ring 31 has the volume V₁ equivalent to the volume of the shielding ring 12, the shielding ring 31 exhibits a sufficient shielding capability. Thus, the magnetic head 30 has a sufficient anti-noise capability.

The shielding ring 31 is fabricated by processing 6 sheet pieces using a pressing machine and then integrating them. Further, the shielding ring 31 having such a structure has enough mechanical strength so as not to be likely to crack, so that yield rate of production is high. Thus, production costs for the shielding ring 31 are approximately 1/5 the production costs for the shielding ring 12 shown in FIG.1. The magnetic head 30 is accordingly economical in comparison to the magnetic head 10 shown in FIG.1 in the related art.

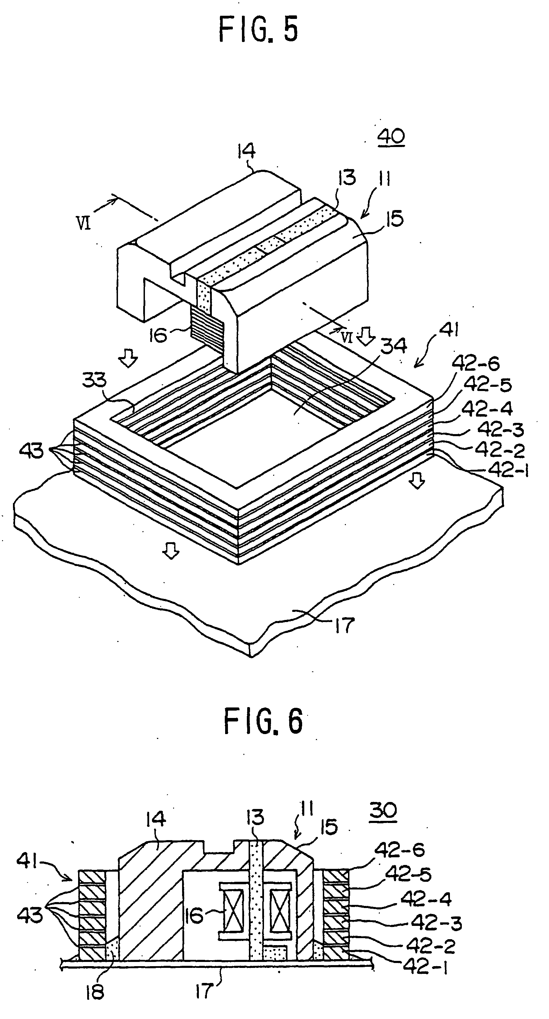

With reference to FIGS.5 and 6, the magnetic head 40 for floppy discs in the first embodiment of the present invention will now be described. Elements shown in FIGS.5 and 6 having structures identical to those of the corresponding elements shown in FIGS.3 and 4 are given reference numerals the same as those given to such corresponding elements, description of the former elements therefore being omitted. A shielding ring. 41 having an opening 34 therein is formed as follows: 6 rectangle-frame-shaped magnetic-metal sheet pieces 42₋₁ through 42₋₆ (bottom through top sheet pieces), each made of permalloy and having an opening 33, are formed through a press-using process. An adhesive insulator layer 43 made of thermoplastic resin is provided on a top side of each of the second through bottom sheet piece 42₋₅ through 42₋₁. Heat is applied to the 6 sheet pieces 42₋₁ through 42₋₆ previously stacked on one another so that the adhesive insulator layers 43 melt so as to adhere the sheet pieces to one another. Thus, the 6 sheet pieces are integrated. As a result, the respective insulator layers 43 are present between adjacent sheet pieces of the sheet pieces 42₋₁ through 42₋₆ as shown in FIGS.5 and 6. The insulator layers 43 electrically insulating the sheet pieces from one another. The openings 33 of the 6 sheet pieces form the opening 34 of the shielding ring 31 as a result of the openings 33 being aligned with one another.

The shielding ring 41 is fixed on the gimbal plate 17 using the adhesive 18 and surrounds the core-slider assembly 11, also fixed on the gimbal plate 17 using the adhesive 18, so as to shield the coil 16 in particular from an external magnetic field.

The shielding ring 41, having a volume equivalent to the volume V₁ of the shielding ring 31 shown in FIG.3, has a structure in which the magnetic-metal sheet pieces 42₋₁ through 42₋₆ are insulated from one another by using insulator the layers 43 as described above. If an external magnetic field having a frequency of 200 through 600 kHz is applied to the shielding ring 41, a stray electric current is as a result separately induced in each of the sheet pieces 42₋₁ through 42₋₆. Since a thickness of each of the sheet pieces is small, an electric resistance of the each of the sheet pieces is accordingly high. As a result, the amount of the stray electric current induced in each of the sheet pieces is too small to induce a magnetic field which significantly adversely affects the coil 16 surrounded by the shielding ring 41 consisting of the sheet pieces and insulator layers. Thus, the shielding capability of the shielding ring 41 is higher than that of the shielding ring 31 shown in FIG.3. Thus, the magnetic head 40 in the first embodiment of the present invention has a superior anti-noise capability in comparison to the magnetic head 30 shown in Figure 3.

Further, the shielding ring 41 having the above-described structure can be easily manufactured and also has enough mechanical strength so it is not likely to crack, unlike in the case of the sintered-ferrite shielding ring 12 shown in FIG.1. Thus, by using the shielding ring 41 having the above-described structure, production costs of the magnetic head 40 in the first embodiment of the present invention can be reduced so as to be less than those of the magnetic head 10 using the sintered-ferrite shielding ring 12.

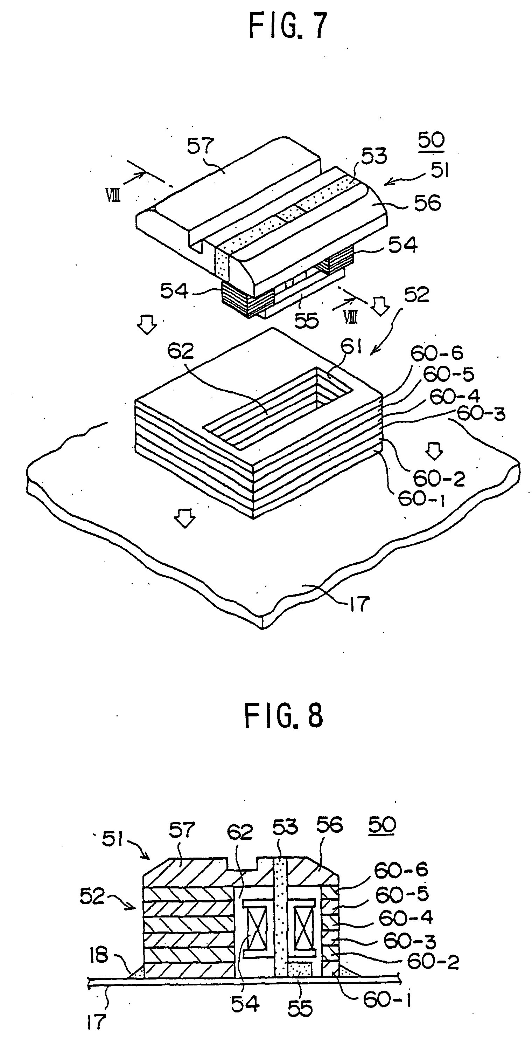

With reference to FIGS. 7 and 8, the magnetic head 50 as background to the second and third embodiments of the present invention will be now described. The magnetic head 50 includes a core-slider assembly 51 and a shielding ring 52. The core-slider assembly 51 includes a core 53, two coils 54, 54 wound on a front-left side and a rear-right side, as shown in FIG.7, of the core 53 at a middle portion thereof as shown in FIG.8, a back bar 55 fixed on a bottom portion of the core 53 and two sliders 56 and 57 fixed on two sides of a top portion of the core 53, as shown in the figures.

The sliders 56 and 57 have shapes different from those of the sliders 14 and 15 of each of the magnetic heads 30 and 40 as shown in the relevant figures. That is, the sliders 14 and 15 have portions located at the sides of the coil 16, while the sliders 56 and 57 do not have portions located at the sides of the coils 54 and 54.

The shielding ring 52 which is rectangular-parallelepiped-shaped and has an opening 62 therein is formed as follows: 6 rectangular sheet pieces 60₋₁ through 60₋₆, each made of permalloy and having an opening 61, are formed through a press-using process. The 6 sheet pieces are stacked on one another and fastened to one another by deforming edges of the sheet pieces together so that the 6 sheet pieces are integrated. The openings 61 of the 6 sheet pieces form the opening 62 of the shielding ring 52 as a result of the openings 61 being aligned with one another. Each of the sheet pieces 60₋₁ through 60₋₆, has plan view dimensions corresponding to the plan view dimensions of the sliders 56 and 57 and core 53 of the core-slider assembly 51. The opening 62, being rectangular and located on the right side, as shown in FIG.8, of the shielding ring 52, has a cross sectional area and a position such that the coils 54 and 54 and back bar 55 are fitted in the opening 62 as shown in FIG.8 while the sliders 56 and 57 are aligned with the shielding ring 52 as shown in FIG.8.

Thus, the opening 62 has the cross sectional area for containing only a part of the core-slider assembly 51, which part includes the coils 54 and 54 and back bar 55 but does not include the sliders 56 and 57. Accordingly, the cross sectional area of the opening 62 can be smaller than both of the opening of the shielding ring 12 and the openings 34 of the shielding ring 31 and 41, respectively, if the core-slider assembly 51 not including the sliders 56 and 57 has outline dimensions identical to those of the core-slider assembly 11 not including the sliders 14 and 15. As a result, a volume V₂ of the shielding ring 52 can be larger than the volume of each of the shielding rings 12, 31 and 41 if outline dimensions of the shielding ring 52 are the same as those of each of the shielding rings 12, 31 and 41.

Bottom surfaces of the sliders 56 and 57 are adhered onto a top surface of the shielding ring 52 so that the coils 54 and 54 and back bar 55 are inserted into the opening 62 and inner walls of the opening 62 surround and are proximate to the coils 54 and 54, as shown in FIG.8. The magnetic head 50 is fixed on the gimbal plate 17 as a result of adhering a bottom portion of the shielding ring 52 to the plate 17 as shown in FIG.8.

The shielding ring 52 has a volume V₂ larger than those of the rings in the related art and surrounds and is proximate to the coils 54 and 54, as described above. As a result, the shielding ring 52 can have an improved shielding capability in comparison to the shielding ring 31 of the magnetic head 30 shown in FIG.3. Thus, the magnetic head 50 shown in Figures 7 and 8 has a superior anti-noise capability in comparison to the magnetic head 30 shown in Figures 3 and 4.

Further, the shielding ring 52 having the above-described structure can be easily manufactured and also has enough mechanical strength so it is not likely to crack, unlike in the case of the sintered-ferrite shielding ring 12 shown in FIG.1. Thus, by using the shielding ring 52 having the above-described structure production costs of the magnetic head 50 shown in Figures 7 and 8 can be reduced so as to be less than those of the magnetic head 10 using the sintered-ferrite shielding ring 12.

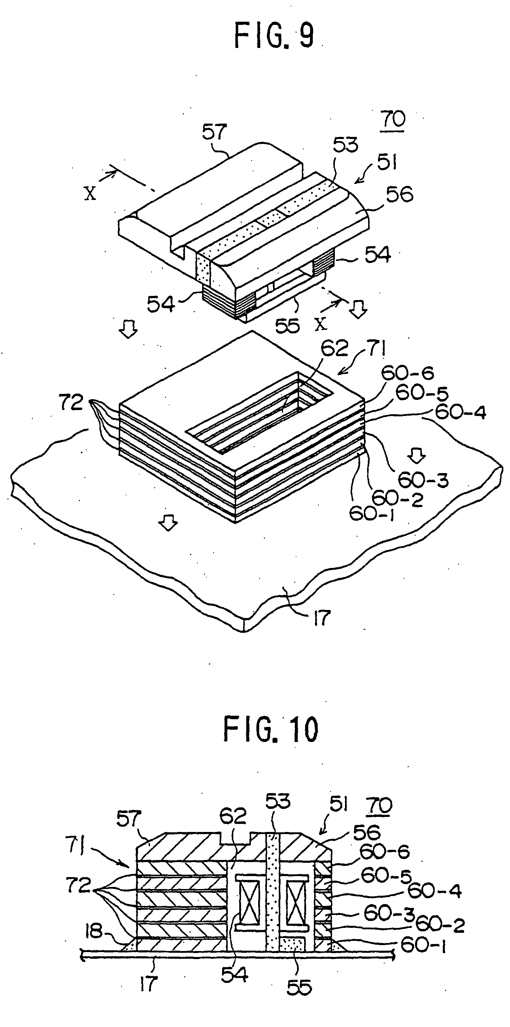

With reference to FIGS.9 and 10, the magnetic head 70 for floppy discs in the second embodiment of the present invention will be now described. Elements shown in FIGS.9 and 10 having structures identical to those of the corresponding elements shown in FIGS.7 and 8 are given reference numerals the same as those given to such corresponding elements, description of the former elements therefore being omitted. A shielding ring 71 having the opening 62 therein is formed as follows: An adhesive insulator layers 72 made of thermoplastic resin are provided on a top side of each of the second through bottom sheet pieces 60₋₅ through 60₋₁. Heat is applied to the 6 sheet pieces 60₋₁ through 60₋₆ previously stacked on one another so that the adhesive insulator layers 72 melt so as to adhere the sheet pieces to one another. Thus, the 6 sheet pieces are integrated. As a result, the respective insulator layers 72 are present between adjacent sheet pieces of the sheet pieces 60₋₁ through 60₋₆ as shown in FIGS.9 and 10, the insulator layers 72 electrically insulating the sheet pieces from one another.

The shielding ring 71 having the opening 62 is fixed on the gimbal plate 17 using the adhesive 18 and surrounds the core-slider assembly 51, also fixed on the gimbal plate 17 using the adhesive 18, so as to shield the coils 54 in particular from an external magnetic field.

Since the shielding ring 71 has a stack arrangement similar to the stack arrangement of the shielding ring 41 shown in FIGS.5 and 6, the shielding ring 71 has a shielding capability superior to that of the shielding ring 52 shown in FIG.8, as a result of stray electric currents induced in the sheet pieces 60₋ ₁ through 60₋₆ being reduced for the same reason as that described above in the description of the shielding ring 41. Thus, the magnetic head 70 in the second embodiment of the present invention has a superior anti-noise capability in comparison to the magnetic head 50 shown in Figures 7 and 8.

Further, the shielding ring 71 having the above-described structure can be easily manufactured and also has enough mechanical strength so it is not likely to crack, unlike in the case of the sintered-ferrite shielding ring 12 shown in FIG.1. Thus, by using the shielding ring 71 having the above-described structure, production costs of the magnetic head 70 in the second embodiment of the present invention can be reduced so as to be less than those of the magnetic head 10 using the sintered-ferrite shielding ring 12.

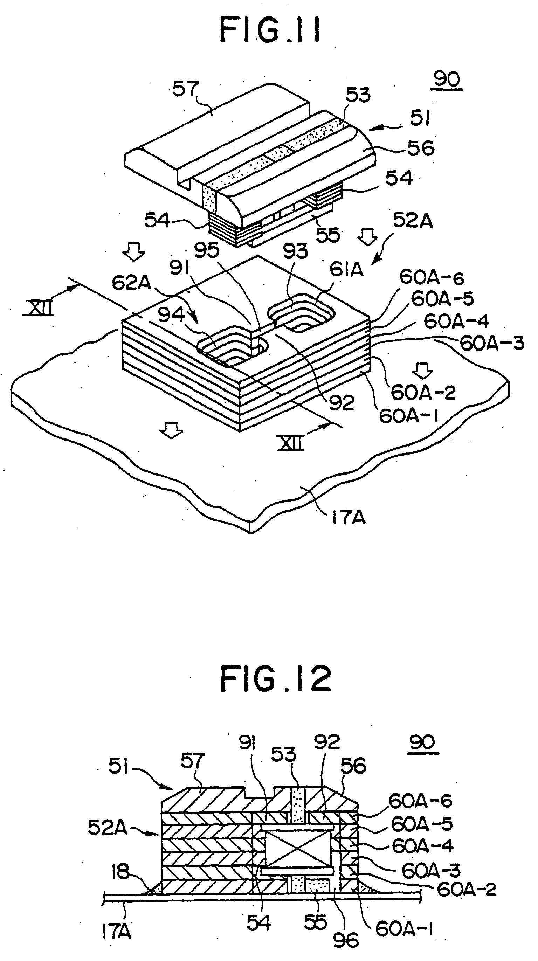

With reference to FIGS.11 and 12, the magnetic head 90 for floppy discs in the third embodiment of the present invention will now be described. Elements shown in FIGS.11 and 12 having structures identical to those of the corresponding elements shown in FIGS.7 and 8 are given reference numerals the same as those given to such corresponding elements, description of the former elements therefore being omitted. A rigid shielding ring 52A of a magnetic head 90 is identical to the shielding ring 52 of the magnetic head 50, excepting that the shape of an opening 62A of the shielding ring 52A is different from the shape of the opening 62 of the shielding ring 52, as can be seen by comparing FIGS.9 and 11. In the opening 62A projections 91 and 92 are formed to project inside from opposite sides of the rectangular-shaped opening, while a cross section of the opening 62 is a simple rectangular shape. The projections 91 and 92 define opening portions 93 and 94, each being rectangular, at two sides of the projections 91 and 92 as shown in FIG.11. Four corners of the rectangle of each of the opening portions 93 and 94 are rounded as shown in FIG.11. Projecting ends of the projections 91 and 92 further define a clearance portion 95. A distance between the projecting ends of the projection and 92 in the clearance portion 95 is slightly larger than a thickness of the core 53.

Further, as shown in FIG.12, the projection 92 consists of relevant parts of top three sheet pieces 60A₋₆, 60A₋₅ and 60A₋₄ of the 6 sheet pieces 60A₋₁ through 60A₋₆. As a result, a space 96 is defined below the relevant part of the bottom sheet piece 60A₋₄ of the top three sheet pieces. Therefore, the core-slider assembly 51 identical to that in the magnetic head 50 can be fitted into the opening 62A as shown in FIG.12. That is, the coils 54 and 54 are inserted into respective opening portions 93 and 94, the core 53 is inserted into the clearance portion 95, and the back bar 55 is inserted into the space 96. However, actually, the back bar 55 is fixed onto the core 53 only after the core-slider assembly 51 without the back bar 55 has been inserted into the shielding ring 52A. Then, after the back bar 55 has been fixed onto the core 53 of the core-slider assembly 51 previously inserted in the shielding ring 52A, the shielding ring 52A carrying the core-slider assembly 51 is fixed on a gimbal plate 17A using the adhesive 18.

The gimbal plate 17A is obtained as a result of forming an opening in a part of the gimbal plate 17 used for the above-described magnetic heads. This part comes into contact with a bottom surface of the above-mentioned projection 91 if the core-slider assembly 51 is properly inserted into the shielding ring 52A. After the magnetic head 90 fixed on the gimbal plate 17A is mounted on the carriage of the magnetic disc device via the gimbal plate 17A, a pivot of the carriage comes into contact with the bottom surface of the projection 91 directly through the opening formed in the gimbal plate 17A, in FIG.12, of the gimbal plate 17A. Thus, the magnetic head 90 can be positioned by pressing the magnetic head 90 via the rigid shielding ring 52A, not by pressing it via the flexible gimbal plate 17A. As a result, the magnetic device can very accurately position the magnetic head 90 via the carriage and pivot.

Further, the magnetic head 90 in the third embodiment of the present invention has advantages in addition to that described above and in addition to those obtained from the magnetic head 50. The projections 91 and 92 are inserted into a space between the coils 54 and 54 after the core-slider assembly 51 is inserted in the shielding ring 52A as shown in FIG.12. Thus, the shielding ring 52A surrounds and is proximate to the coils 54 and 54, resulting in the shielding capability of the magnetic head 90 being improved in comparison to that of the magnetic head 50.

Further, in each of the magnetic heads 30, 40, 50, 70 and 90, Sendust may be used as material of sheet pieces of the shielding ring instead of the permalloy. Further, a laser-beam welding method may be used as a method for fastening the sheet pieces to one another instead of the above-mentioned method of deforming edges of the sheet pieces together.

Further, the present invention is not limited to the above described embodiments, and variations and modifications may be made without departing from the scope of the present invention as defined in the appended claims.

## Claims

1. A magnetic head (90) for use with a magnetic recording medium, said head comprising:
a slider (51);
two magnetic cores (53) fixed at spaced locations on said slider;
two electrical coils (54), one of which is wound on each of said two cores, said coils being spaced from each other when so wound, each of said coils having a winding axis about which said electrical coil is wound on said magnetic core, each of said coils having a generally rectangular outline in a cross section taken normal to said winding axis; said rectangular outline being formed by four sides of the coil, each of said coils having one side which faces a side of the other of said coils and having three remaining sides; and
a laminated shielding member (52A) for shielding said two coils (54) from an external magnetic field and for supporting said slider, said shielding member comprising a plurality of parallel layers (60A₋₁ through 60A₀₆) in a stack, said layers being formed of a magnetic material, each layer of said plurality of layers of magnetic material being parallel to a plane perpendicular to said axes about which said coils are wound on said cores, said shielding member further comprising insulator layers (43; 72) provided between said plurality of layers of magnetic material so as to electrically insulate said plurality of layers of magnetic material from one another, said shielding member being formed with a pair of generally rectangular, spaced cavities (93, 94) with a passage (95) opening into said cavities extending therebetween, said cavities and passage extending into said shielding member in a direction along the winding axes of said coils, said cavities receiving said coils so that the layers of said shielding member are in contiguity with said coils such that said member surrounds the entire three remaining sides of each of said coils and partially surrounds said one side of each of said coils as a result of the opening formed in each of said cavities by said passage, thereby to enhance the shielding effect provided by said shielding member,
said magnetic head coacting with the recording medium to perform a writing of data onto said recording medium or a reading of data previously written on the recording medium.

2. The magnetic head according to claim 1, wherein each layer of said plurality of layers of magnetic material (60A₋₁ through 60A₋₆) of said shielding member has openings forming said cavities receiving each of said coils, said openings of said plurality of layers of magnetic material being aligned with one another.

3. The magnetic head according to claim 1 or claim 2, wherein said magnetic head (90) comprises a magnetic head for floppy discs.

4. The magnetic head according to claim 1, claim 2 or claim 3, wherein each layer of said plurality of layers of magnetic material is made of magnetic metal.

5. The magnetic head according to claim 4, wherein said magnetic metal is permalloy.

6. The magnetic head according to claim 4, wherein said magnetic metal is a high permeability alloy containing Fe, Al, and Si.

7. The magnetic head according to claim 1, wherein each layer of said insulator layers is made of thermoplastic resin.

8. A magnetic head comprising a core and a coil wound on said core;
said magnetic head further comprising:
a shielding member (41; 71; 52A) for shielding said coil (16; 54) from an external magnetic field,
said shielding member comprising a plurality of magnetic layers (42₋₁ through 42₋₆; 60₋₁ through 60₋₆; 60A₋₁ through 60A₋₆) arranged in a stack,
said shielding member generally surrounding the core (13; 53) and coil (16; 54); and
said magnetic head being either in close proximity or in contact with a recording medium so as to perform at least either an operation of writing data onto said recording medium or an operation of reading data previously written on the recording medium, **characterized in that**
said shielding member further comprises insulator layers (43; 72), and
said insulator layers are provided between said plurality of magnetic layers so as to electrically insulate said plurality of magnetic layers from one another.

## Patentansprüche

1. Magnetkopf (90) zur Verwendung mit einem magnetischen Aufzeichnungsmedium, welcher Kopf enthält:
ein Gleitstück (51);
zwei Magnetkerne (53), die an voneinander beabstandeten Stellen am Gleitstück angebracht sind;
zwei elektrische Wicklungen (54), von denen jeweils eine auf einen der beiden Kerne gewickelt ist, welche derart gewickelten Wicklungen voneinander beabstandet sind, jede der Wicklungen eine Wicklungsachse aufweist, um die die elektrische Wicklung auf dem Magnetkern gewickelt ist, jede der Wicklungen in einem senkrecht zur Wicklungsachse verlaufenden Querschnitt einen generell rechteckförmigen Umriß aufweist, der rechteckförmige Umriß von vier Seiten der Wicklung gebildet ist, jede der Wicklungen eine Seite hat, die einer Seite der anderen der Wicklungen gegenüberliegt, und drei restliche Seiten hat; und
ein laminiertes Abschirmglied (52A) zum Abschirmen der beiden Wicklungen (54) gegenüber einem externen Magnetfeld und zum Tragen des Gleitstücks, welches Abschirmglied eine Mehrzahl paralleler Schichten (60A₋₁ bis 60A₋₆) in einem Stapel enthält, welche Schichten aus magnetischem Material gebildet sind, jede Schicht der Mehrzahl von Schichten aus magnetischem Material parallel zu einer Ebene verläuft, die senkrecht auf den Achsen steht, um die die Wicklungen auf den Kernen gewickelt sind, welches Abschirmglied ferner Isolierschichten (43; 72) enthält, die zwischen der Mehrzahl von Schichten aus magnetischem Material vorgesehen sind, um die Mehrzahl von Schichten aus magnetischem Material voneinander elektrisch zu isolieren, welches Abschirmglied aus einem Paar generell rechteckförmiger, voneinander beabstandeter Hohlräume (93, 94) gebildet ist, zwischen denen sich ein in die Hohlräume mündender Durchgang (95) erstreckt, welche Hohlräume und welcher Durchgang sich in das Abschirmglied in einer Richtung erstrecken, die längs der Wicklungsachsen der Wicklungen verläuft, welche Hohlräume die Wicklungen aufnehmen, so daß die Schichten des Abschirmglieds derart an die Wicklungen angrenzen, daß das Glied die drei restlichen Seiten jeder der Wicklungen vollständig und die eine Seite jeder der Wicklungen teilweise umgibt, und zwar aufgrund der Mündung, die der Durchgang in jedem der Hohlräume ausbildet, wodurch die durch das Abschirmglied vorgesehene Abschirmwirkung verstärkt wird;
wobei der Magnetkopf mit dem Aufzeichnungsmedium zusammen arbeitet, um Daten auf dem Aufzeichnungsmedium aufzuschreiben und zuvor auf das Aufzeichnungsmedium geschriebene Daten auszulesen.

2. Magnetkopf nach Anspruch 1, bei dem jede Schicht der Mehrzahl von aus magnetischem Material gebildeten Schichten (60A₋₁ bis 60A₋₆) des Abschirmglieds Öffnungen hat, die die Hohlräume bilden, die jeweiligen der Wicklungen aufnehmen, welche Öffnungen der Mehrzahl von Schichten aus magnetischem Material miteinander ausgerichtet sind.

3. Magnetkopf nach Anspruch 1 oder Anspruch 2, bei dem der Magnetkopf (90) einen Magnetkopf für Disketten enthält.

4. Magnetkopf nach Anspruch 1, Anspruch 2 oder Anspruch 3, bei dem jede Schicht der Mehrzahl von aus magnetischem Material gebildeten Schichten aus einem magnetischem Metall hergestellt ist.

5. Magnetkopf nach Anspruch 4, bei dem das magnetische Metall Permalloy ist.

6. Magnetkopf nach Anspruch 4, bei dem das magnetische Metall eine Fe, Al und Si enthaltende Legierung hoher Permeabilität ist.

7. Magnetkopf nach Anspruch 1, bei dem jede Schicht der Isolierschichten aus thermoplastischem Harz gebildet ist.

8. Magnetkopf enthaltend einen Kern und eine auf den Kern gewickelte Wicklung, welcher Magnetkopf ferner enthält:
ein Abschirmglied (41; 71; 52A) zum Abschirmen der Wicklung (16; 54) gegenüber einem externen Magnetfeld,
welches Abschirmglied eine Mehrzahl magnetischer Schichten (42₋₁ bis 42₋₆; 60₋₁ bis 60₋₆; 60A₋₁ bis 60A₋₆) enthält, die in einem Stapel angeordnet sind,
welches Abschirmglied generell den Kern (13; 53) und die Wicklung (16; 54) umgibt; und
welcher Magnetkopf entweder in engster Nähe oder in Berührung mit einem Aufzeichnungsmedium ist, um wenigstens entweder Daten auf das Aufzeichnungsmedium zu schreiben oder zuvor auf das Aufzeichnungsmedium geschriebene Daten auszulesen, **dadurch gekennzeichnet, daß**
das Abschirmglied ferner Isolierschichten (43; 72) enthält und die Isolierschichten zwischen der Mehrzahl magnetischer Schichten so vorgesehen sind, daß sie die Mehrzahl magnetischer Schichten voneinander elektrisch isolieren.

## Revendications

1. Tête magnétique (90) devant être utilisée avec un support d'enregistrement magnétique, ladite tête comprenant :
un coulisseau (51) ;
deux noyaux magnétiques (53) fixés à des emplacements espacés sur ledit coulisseau ;
deux bobines électriques (54), chacune d'elles étant enroulée sur chacun desdits deux noyaux, lesdites bobines étant espacées l'une de l'autre lorsqu'elles sont ainsi enroulées, chacune desdites bobines présentant un axe d'enroulement autour duquel ladite bobine électrique est enroulée sur ledit noyau magnétique, chacune desdites bobines présentant un contour extérieur globalement rectangulaire en coupe transversale perpendiculairement audit axe d'enroulement ; ledit contour extérieur rectangulaire étant formé par quatre côtés de la bobine, chacune desdites bobines possédant un côté faisant face à un côté de l'autre desdites bobines et possédant trois autres côtés restants ; et
un élément de blindage feuilleté (52A) pour blinder lesdites deux bobines (54) vis-à-vis d'un champ magnétique externe et pour supporter ledit coulisseau, ledit élément de blindage comprenant plusieurs couches parallèles (60A₋₁ à 60A₋₆) empilées, lesdites couches étant constituées d'un matériau magnétique, chaque couche desdites plusieurs couches de matériau magnétique étant parallèle à un plan perpendiculaire auxdits axes autour desquels lesdites bobines sont enroulées sur lesdits noyaux, ledit élément de blindage comprenant en outre des couches isolantes (43 ; 72) situées entre lesdites plusieurs couches de matériau magnétique de façon à isoler électriquement lesdites couches de matériau magnétique les unes des autres, ledit élément de blindage comprenant deux cavités espacées globalement rectangulaires (93, 94), un passage (95) s'ouvrant dans lesdites cavités s'étendant entre elles, lesdites cavités et ledit passage s'étendant dans ledit- élément de blindage selon une direction parallèle aux axes d'enroulement desdites bobines, lesdites cavités recevant lesdites bobines de sorte que les couches dudit élément de blindage sont contiguës auxdites bobines afin que ledit élément entoure la totalité des trois côtés restants de chacune desdites bobines et entoure partiellement ledit un côté de chacune desdites bobines en conséquence de l'ouverture formée dans chacune desdites cavités par ledit passage, pour améliorer ainsi l'effet de blindage produit par ledit élément de blindage,
ladite tête magnétique agissant en coopération avec le support d'enregistrement pour réaliser une écriture de données sur ledit support d'enregistrement ou une lecture de données écrites au préalable sur le support d'enregistrement.

2. Tête magnétique selon la revendication 1, dans laquelle chaque couche desdites plusieurs couches de matériau magnétique (60A₋₁ à 60A₋₆) dudit élément de blindage comporte des ouvertures formant lesdites cavités recevant chacune desdites bobines, lesdites ouvertures desdites plusieurs couches de matériau magnétique étant alignées les unes aux autres.

3. Tête magnétique selon la revendication 1 ou la revendication 2, dans laquelle ladite tête magnétique (90) comprend une tête magnétique pour disquettes.

4. Tête magnétique selon la revendication 1, la revendication 2 ou la revendication 3, dans laquelle chaque couche desdites plusieurs couches de matériau magnétique est réalisée à partir d'un métal magnétique.

5. Tête magnétique selon la revendication 4, dans laquelle ledit métal magnétique est le permalloy.

6. Tête magnétique selon la revendication 4, dans laquelle ledit métal magnétique est un alliage à perméabilité élevée contenant du Fe (fer), de l'Al (aluminium), et du Si (silicium).

7. Tête magnétique selon la revendication 1, dans laquelle chaque couche parmi lesdites couches isolantes est réalisée à partir de résine thermoplastique.

8. Tête magnétique comprenant un noyau et une bobine enroulée sur ledit noyau ;
ladite tête magnétique comprenant en outre :
un élément de blindage (41 ; 71 ; 52A) pour blinder ladite bobine (16 ; 54) vis-à-vis d'un champ magnétique externe,
ledit élément de blindage comprenant plusieurs couches magnétiques (42₋₁ à 42₋₆ ; 60₋₁ à 60₋₆ ; 60A₋₁ à 60A₋₆) disposées en pile,
ledit élément de blindage entourant globalement le noyau (13 ; 53) et la bobine (16 ; 54) ; et
ladite tête magnétique étant soit à proximité étroite, soit en contact avec un support d'enregistrement de façon à effectuer au moins soit une opération d'écriture de données sur ledit support d'enregistrement, soit une opération de lecture de données écrites au préalable sur le support d'enregistrement, **caractérisée en ce que**
ledit élément de blindage comprend en outre des couches isolantes (43 ; 72), et
lesdites couches isolantes sont situées entre lesdites plusieurs couches magnétiques de façon à isoler électriquement lesdites plusieurs couches magnétiques les unes des autres.
